## Europäisches Patentamt

## European Patent Office

## Office européen des brevets

(11) Veröffentlichungsnummer: **0 327 143**

**A2**

(12) **EUROPÄISCHE PATENTANMELDUNG**

(21) Anmeldenummer: **89105992.5**

(22) Anmeldetag: **06.02.86**

(51) Int. Cl.⁴: **A01C 17/00**

(30) Priorität: 06.02.85 DE 3503907
18.09.85 DE 3533217
16.11.85 DE 3540784

(43) Veröffentlichungstag der Anmeldung:
09.08.89 Patentblatt 89/32

(60) Veröffentlichungsnummer der früheren
Anmeldung nach Art. 76 EPÜ: **0 191 417**

(84) Benannte Vertragsstaaten:
**AT BE CH DE FR GB IT LI LU NL SE**

(71) Anmelder: **Amazonen-Werke H. Dreyer GmbH
& Co. KG
Postfach 51
D-4507 Hasbergen-Gaste(DE)**

(72) Erfinder: **Dreyer, Heinz, Dipl.-Ing. Univ. Dr.
Am Amazonenwerk 7
D-4507 Hasbergen(DE)**
Erfinder: **Wiese, Walter
Roter Berg 18
D-4507 Hasbergen(DE)**
Erfinder: **Lührmann, Johannes
Bergstrasse 14
D-4512 Wallenhorst(DE)**

(74) Vertreter: **Patentanwälte Grünecker,
Kinkeldey, Stockmair & Partner
Maximilianstrasse 58
D-8000 München 22(DE)**

(54) **Schleuderstreuer.**

(57) Die Erfindung betrifft einen Schleuderstreuer mit einem Vorratsbehälter und einer Verteileinrichtung mit zumindest zwei angetriebenen Verteilorganen, denen die auszubringenden Materialien über zumindest je eine mit einer Schieberanordnung verschließbare und auf eine bestimmte Öffnungsweite einstellbare Auslauföffnung zuführbar sind, wobei die Schieberanordnungen unabhängig voneinander mit Hilfe zweier vom Schleppersitz aus betätigbarer Fernbedienungsvorrichtungen in die Schließstellung und in die Öffnungsstellung bringbar sind. Um einen Schleuderstreuer dieser Art so weiterzubilden, daß er sich durch verbesserte Anpassungsfähigkeit an unterschiedliche Einsatzbedingungen auszeichnet, ist vorgesehen, daß die Fernbedienungseinrichtungen zum Verstellen der Schieberanordnungen in zur bestimmten Öffnungsstellung zusätzliche Öffnungsstellungen ausgebildet sind.

FIG.1

## Schleuderstreuer

Die Erfindung betrifft einen Schleuderstreuer, insbesondere für gekörnte Düngemittel, gemäß dem Oberbegriff des Patentanspruchs 1.

Aus der GB-PS 1 600 407 ist ein derartiger Schleuderstreuer bekannt, dessen Fernbedienungsvorrichtungen je einen vom Schleppersitz aus bedienbaren Betätigungshebel und einen die Verbindung zwischen der jeweiligen Schieberanordnung und dem Betätigungshebel herstellenden Bowdenzug aufweisen. Jeder Betätigungshebel ist als Kippsprunghebel ausgebildet, der lediglich in zwei Stellungen bringbr ist. In der einen Hebelstellung ist die Auslauföffnung der zugeordneten Schieberanordnung geschlossen und in der anderen Stellung vollständig geöffnet. Mit diesem bekannten Schleuderstreuer besteht folglich außer der völligen Unterbrechung der Materialausbringung keine Möglichkeit, die Ausbringmenge zu variieren, um den Schleuderstreuer an unterschiedliche Einsatzbedingungen anzupassen.

Es ist Aufgabe der Erfindung, einen Schleuderstreuer der eingangs genannten Art so weiterzubilden, daß er sich durch verbesserte Anpassungsfähigkeit an unterschiedliche Einsatzbedingungen auszeichnet.

Diese Aufgabe wird erfindungsgemäß durch das Kennzeichen des Patentanspruchs 1 gelöst.

Der erfindungsgemäße Schleuderstreuer erlaubt es, die Schieberanordnungen nicht nur in eine Schließ- und in eine einzige Öffnungsstellung, in der die Auslauföffnungen vollständig geöffnet sind, sondern darüberhinaus in zusätzliche Öffnungsstellungen zu bringen, so daß die Ausbringmenge entsprechend den Erfordernissen zwischen einem Maximalwert und dem Wert Null variiert und auf diese Weise der Schleuderstreuer in Fahrtrichtung an unterschiedliche Einsatzbedingungen angepaßt werden kann. Das erfindungsgemäße Merkmal der Einstellung der Schieberanordnung auf zusätzliche Öffnungsstellungen ermöglicht es, den bisher nicht genutzten potentiellen Vorteil des bekannten Merkmals der Verstellung der Schieberanordnungen unabhängig voneinander zu verwirklichen. Beispielsweise erlaubt erst das Zusammenwirken beider Merkmale den optimalen Einsatz des Schleuderstreuers am Hang. Bei diesem Einsatz ist es sehr wichtig, auf der hangaufwärtigen Seite mehr Material als auf der hangabwärtigen Seite auszubringen und den Schleuderstreuer somit auch in seitliche Richtung, d.h. quer zur Fahrtrichtung, an die verschiedenen Einsatzbedingungen anzupassen. Insgesamt kann der erfindungsgemäße Schleuderstreuer während der Fahrt, d.h. ohne Fahrtunterbrechung, in einfacher und schneller Weise vom Schleppersitz aus an sämtliche vorkommenden unterschiedlichen Einsatzbedingungen angepaßt werden.

Um die zusätzlichen Öffnungsstellungen der Schieberanordnungen wiederholbar mit hoher Einstellgenauigkeit einstellen zu können, ist jede Fernbedienungsvorrichtung vorteilhafterweise mit einer verstellbaren Markierungs- und/oder Arretieranordnung zum Festlegen der zusätzlichen Öffnungsstellungen der Schieberanordnung ausgebildet. Dabei können die zusätzlichen Öffnungsstellungen eine Grundöffnungsstellung und weitere zusätzliche Öffnungsstellungen umfassen, wobei die Öffnungsweiten in den weiteren zusätzlichen Öffnungsstellungen größer und kleiner als in der Grundöffnungsstellung sind.

Vorzugsweise umfaßt jede Markierungs- und/oder Arretieranordnung wenigstens eine Markierungs- und/oder Anschlageinrichtung zum Festlegen der Grundöffnungsstellung und wenigstens zwei Markierungen und/oder Anschläge zum Festlegen zweier weiterer zusätzlicher Öffnungsstellungen der Schieberanordnung, wobei die Öffnungsweite der Auslauföffnung in den zwei weiteren zusätzlichen Öffnungsstellung größer bzw. kleiner als in der Grundöffnungsstellung ist.

Jede Fernbedienungsvorrichtung kann einen über ein Bedienungselement mit der jeweiligen Schieberanordnung verbundenen Betätigungshebel umfassen, mit dem die Markierungen und/oder Anschläge für die zwei weiteren zusätzlichen Öffnungsstellungen zusammenwirken. Vorteilhafterweise sind die an den Betätigungshebeln angeschlossenen Bedienungselemente als Bowdenzüge ausgebildet.

Gemäß einer vorteilhaften Weiterbildung der Erfindung ist die Markierungs- und/oder Anschlageinrichtung für die Grundöffnungsstellung in Form einer Markierung und/oder eines Anschlages ausgebildet, der mit dem Betätigungshebel zusammenwirkt. Die Markierungen und/oder Anschläge für die Grundöffnungssstellung und/oder die weiteren zusätzlichen Öffnungsstellungen können unabhängig voneinander einstellbar sein.

Günstig ist es, wenn die Betätigungshebel und die Markierungen und/oder Anschläge an einem gemeinsamen Betätigungsblock angeordnet sind, der an einer Halterung befestigt ist, die in dem Bereich, aus dem die Schieberanordnungen einsehbar sind, am Schleuderstreuer angeordnet ist.

Vorzugsweise sind die die kleinste Öffnungsweite der Auslauföffnungen festlegenden Markierungen und/oder Anschläge derart ausgebildet, daß die Betätigungshebel zur Verstellung bis in die Schließstellung der Schieberanordnungen leicht an diesen Markierungen und/oder Anschlägen vorbeibewegbar sind.

Gemäß einer anderen vorteilhaften Weiterbildung der Erfindung ist die Markierungs- und/oder Anschlageinrichtung für die Grundöffnungsstellung als eine Rasteinrichtung ausgebildet, die zwei zusammenwirkende Rastelemente an der Schieberanordnung und einen am Rahmen des Schleuderstreuers zur Festlegung der Grundöffnungsstellung verstell- und einstellbares, mit einem der Rastelemente zusammenwirkendes Arretierelement umfaßt.

Jeder Schieberanordnung kann als Einschieberanordnung mit einem Schieber ausgebildet und eines der beiden Rastelemente an diesem Schieber und das andere Rastelement am Arretierelement befestigt sein.

Gemäß einer anderen Ausführung kann jede Schieberanordnung als Doppelschieberanordnung mit einem ersten Schieber und einem zweiten Schieber ausgebildet sein, die relativ zueinander verstellbar sind und zur Festlegung der Öffnungsweite der Auslaßöffnung zusammenwirken, wobei eines der Rastelemente am ersten Schieber und das andere Rastelement am zweiten Schieber befestigt und der erste Schieber in der Grundöffnungsstellung durch das Arretierelement festgelegt ist. Die Doppelschieberanordnung bietet den Vorteil, daß die ersten Schieber während des Einsatzes in der Grundöffnungsstellung verbleiben und somit die Grundausbringmenge festlegen und zur Veränderung der Grundausbringmenge lediglich die zweiten Schieber um eine vergleichsweise geringe Wegstrecke verstellt werden. Dadurch wird eine wiederholbar sehr hohe Einstellgenauigkeit der Schieberanordnungen erzielt, die durch die Ausbildung der Markierungs- und/oder Anschlageinrichtung als Rasteinrichtung unterstützt wird.

Der an dem Betätigungshebel angeschlossene Bowdenzug ist vorteilhafterweise mit seinem Seil am zweiten Schieber angeschlossen und über seine Hülse am ersten Schieber abgestützt.

Anhand einer Zeichnung werden Ausführungsbeispiele nachfolgend erläutert. Hierbei zeigen:

Fig. 1 einen erfindungsgemäßen Anbauschleuderstreuer in Prinzipdarstellung in der Ansicht von hinten,

Fig. 2 den Anbauschleuderstreuer in der Draufsicht und in einem anderen Maßstab,

Fig. 3 eine Dosiereinheit des Anbauschleuderstreuers in vergrößertem Maßstab,

Fig. 4 die Betätigungshebel der Bowdenzüge für die Dosiereinheiten in der Seitenansicht,

Fig. 5 die Anordnung der Betätigungshebel in der Ansicht von hinten,

Fig. 6 die Anordnung der Betätigungshebel in der Draufsicht,

Fig. 7 einen weiteren erfindungsgemäßen Anbauschleuderstreuer in der Ansicht von hinten,

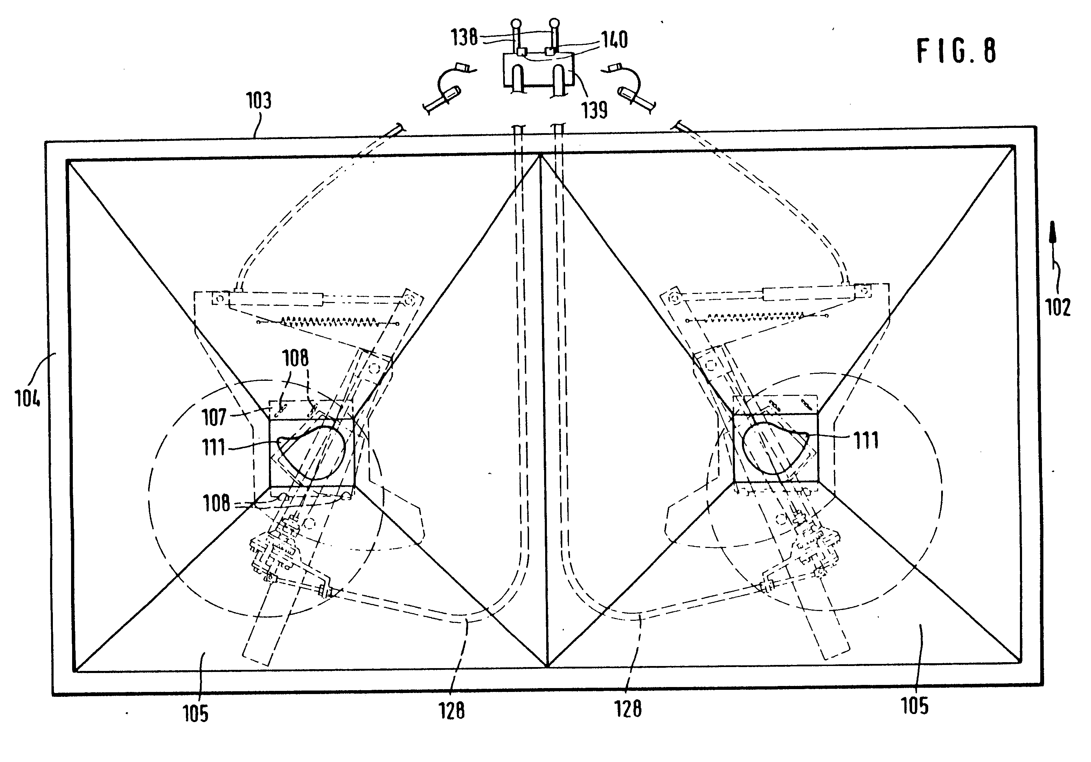

Fig. 8 den Schleuderstreuer aus Fig. 7 in der Draufsicht und in vergrößertem Maßstab,

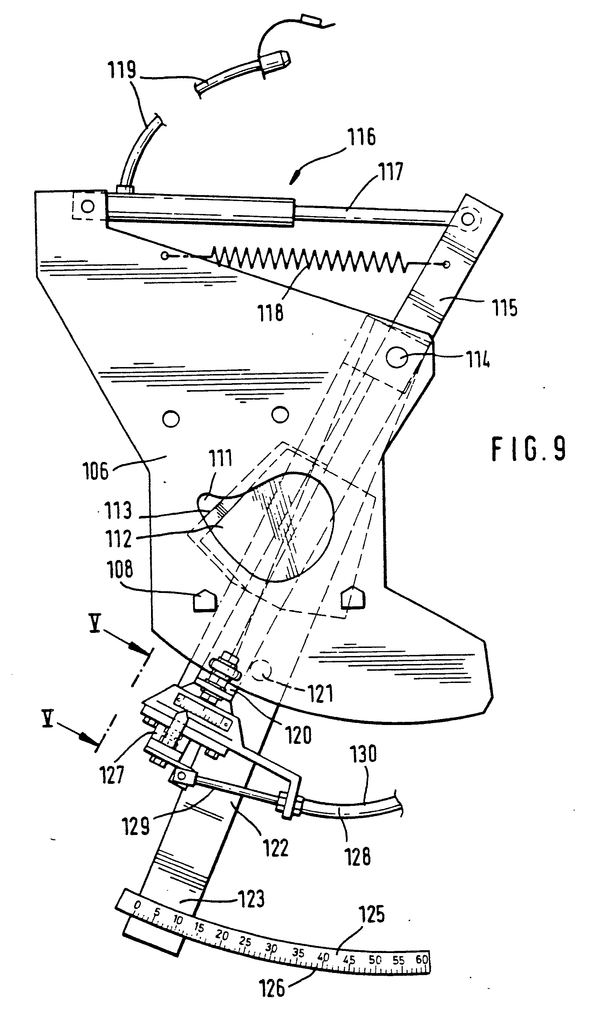

Fig. 9 die linke Dosiereinheit des Schleuderstreuers aus Fig. 8 in vergrößertem Maßstab und in der Draufsicht,

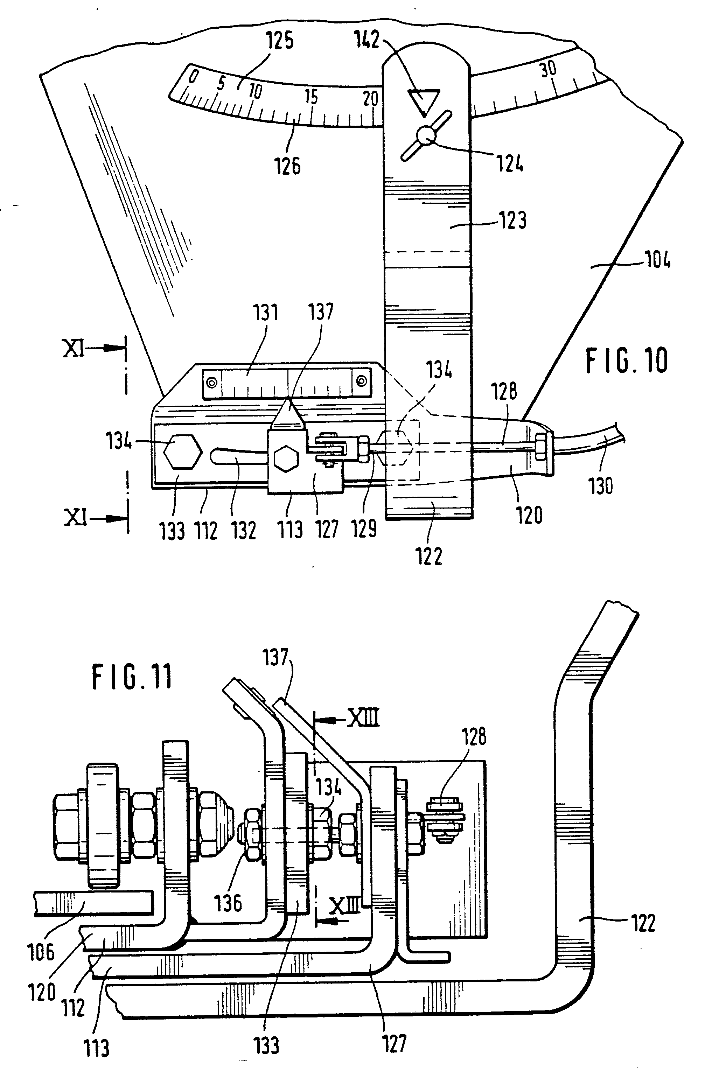

Fig.10 die Dosiereinheit gemäß Fig. 9 -an den Schleuderstreuer angebaut- in der Ansicht von hinten,

Fig.11 die Anordnung der Schieber in der Ansicht XI-XI aus Fig. 10,

Fig.12 das Kunststoffteil eines Rastelementes der Dosiereinheit in der Ansicht von hinten,

Fig. 13 das Rastelement in der Ansicht XIII-XIII, wobei die Schieber sich in Grundstellung befinden,

Fig.14 das Rastelement in der Ansicht XIII-XIII, wobei ein kleinerer Ausbringmengenwert eingestellt ist,

Fig.15 die linke Dosiereinheit eines weiteren Ausführungsbeispieles eines Schleuderstreuers in der Draufsicht,

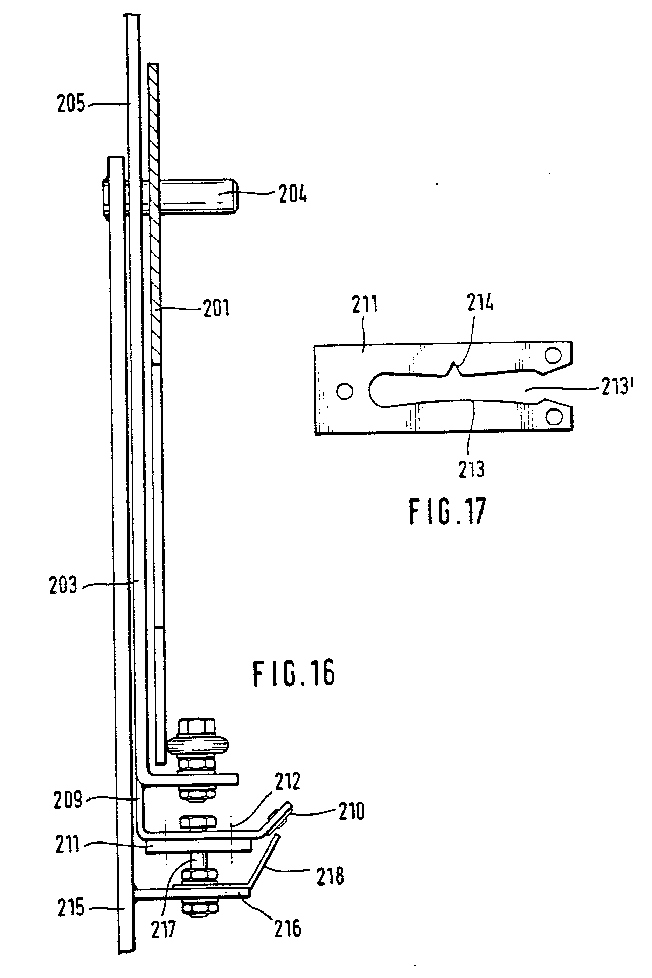

Fig.16 die Dosiereinheit gemäß Fig. 15 in der Ansicht XVI-XVI,

Fig.17 ein Kunststoffteil eines Rastelementes der Dosiereinheit aus Fig. 15 in der Ansicht von hinten,

Fig.18 ein Fernbedienungselement zum Betätigen der Schieber, in der Seitenansicht,

Fig.19 das Fernbedienungselement gemäß Fig. 18, wobei nur die Hälfte des Betätigungsblokkes dargestellt isst, in der Draufsicht,

Fig.20 eine andere Ausführungsform der linken Dosiereinheit eines Schleuderstreuers in der Draufsicht,

Fig.21 ein mit Schrauben an den Boden festklemmbares, einstellares Rastelement, in der Seitenansicht,

Fig.22 ein weiteres Fernbedienungselement, in Seitenansicht, und

Fig.23 das Fernbedienungselement gemäß Fig. 22 in der Draufsicht.

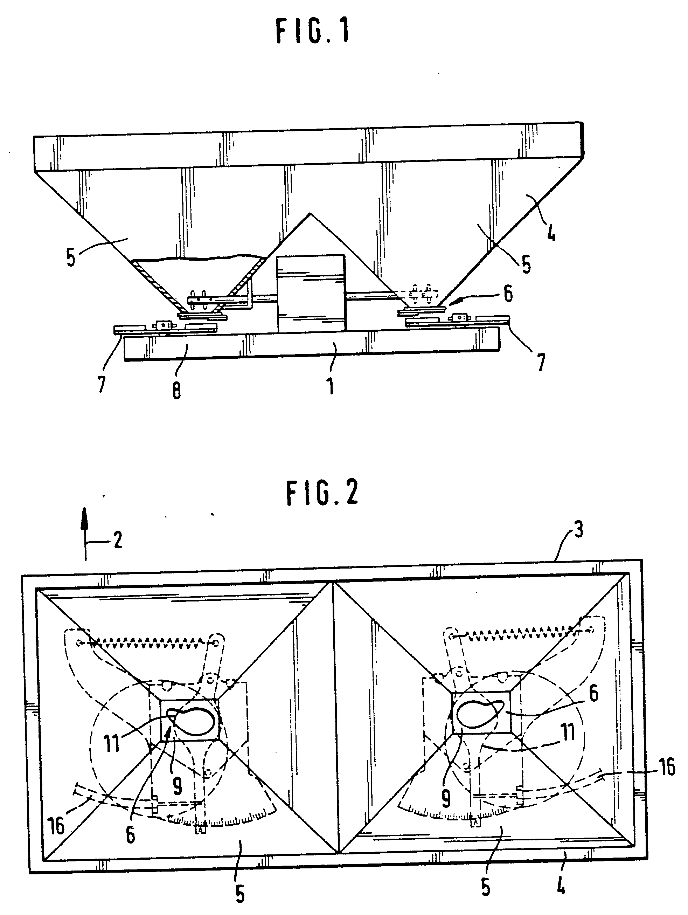

Der Anbauschleuderstreuer nach den Fig. 1-6 weist einen Rahmen 1 auf, der auf seiner in Fahrtrichtung 2 gesehenen vorderen Seite 3 mit Kupplungselementen zum Anbau an einen nicht dargestellten Schlepper ausgestattet ist. Am Rahmen 1 ist ein Vorratsbehälter 4 befestigt, der zwei durch ein dachförmiges Mittelteil getrennte trichterförmige Behälterteile 5 aufweist. Die trichterförmigen Behälterteile 5 weisen eine Dosiereinheit 6 auf. Unterhalb der jeweiligen Dosiereinheit 6 ist jeweils ein als Schleuderscheibe 7 ausgebildetes Verteilorgan angeordnet, wobei die Schleuderscheiben 7 über ein Getriebe 8 von der Schlepperzapfwelle angetrieben werden.

Die Dosiereinheit 6 weist eine Bodenplatte 9 auf, die jeweils unter den trichterförmigen Behälterteilen 5 befestigt ist. In der Bodenplatte 9 befindet sich eine Auslauföffnung 10. Unter der Bodenplatte 9 ist vor der Auslauföffnung 10 ein Schieber 11 auf einem an der Bodenplatte 9 angeschweißten Bolzen 12 befestigt. Mit Hilfe des Schiebers 11 ist die Auslauföffnung 10 zu verschließen bzw. sind verschiedene Öffnungsweiten der Auslauföffnung 10 einzustellen. Durch die Auslauföffnung 10 gelangt das im Vorratsbehälter 4 befindliche Material, wenn der Schieber 11 sich in seiner Öffnungsstellung befindet, auf die Schleuderscheiben 7, die es in Breitverteilung auf der Bodenoberfläche verteilen.

An dem Schieber 11 ist ein über den Bolzen 12 hinausragender Bedienungshebel 13 angeordnet. Zwischen der Bodenplatte 9 und dem Bedienungshebel 13 ist eine Zugfeder 14 angebracht, die den Schieber 11 in Richtung der Öffnungsstellung zieht. Weiterhin ist an dem Schieber 11 auf der dem Bedienungshebel 13 abgewandten Seite ein Bedienungselement 15 in Form eines Bowdenzuges 16 als Teil der Fernbedienungsvorrichtung ausgebildet. Hierbei ist jeweils den unter den Behälterteilen 5 angeordneten Schiebern 11 ein eigener Bowdenzug 16 separat zugeordnet.

Den Bowdenzügen sind jeweils eigene Betätigungshebel 17 und 18 als Teil der Fernbedienungsvorrichtung zugeordnet, die an dem Bedienungsrahmen 19 angeordnet sind, der auf dem den Anbauschleuderstreuer tragenden Schlepper zu befestigen ist. Die Griffe 20 der beiden Betätigungshebel 17 und 18 sind unmittelbar dicht nebeneinander angeordnet, so daß letztere bequem gemeinsam verstellt werden können, so daß die beiden Schieber 11 jeweils gleichzeitig in ihre Öffnungsbzw. Schließstellung gebracht werden.

Auf den Bedienungsrahmen 19 sind neben den Betätigungshebeln 17 und 18 Einstellskalen 21 angeordnet, wobei jedem Betätigungshebel 17 und 18 eine eigene Einstellskala 21 zugeordnet ist. Weiterhin ist auf jeder Skala 21 eine Arretieranordnung als Teil der Fernbedienungsvorrichtung in Form dreier einstellbarer Zeiger oder Anschläge 22, 23 und 24 befestigt. Diese drei einstellbaren Zeiger 22, 23 und 24 sind jeweils für verschiedene Ausbringmengen Material pro Flächeneinheit vorgesehen.

Die Zeiger 22 markieren die Grundausbringmenge Material pro Flächeneinheit. Die Zeiger 23 markieren eine um beispielsweise 10% kleinere Ausbringmenge Material pro Flächeneinheit gegenüber der Grundausbringmenge, und die Zeiger 24 markieren eine um beispielsweise 10% größere Ausbringmenge Material pro Flächeneinheit gegenüber der Grundausbringmenge.

Zwischen den Betätigungshebeln 17 und 18 ist eine Kupplungseinrichtung 25 angeordnet, über die die beiden Betätigungshebel 17 und 18 miteinander zu kuppeln sind. Somit sind die Betätigungshebel 17 und 18 in einfacher Weise gleichzeitig zu verschieben. Weiterhin sind die Betätigungshebel 17 und 18 und somit auch die den jeweiligen Betätigungshebeln 17 und 18 über die Bowdenzüge 16 zugeordneten Schieber getrennt zu verstellen. Somit kann beispielsweise der eine Schieber 11 in seiner Schließstellung verbleiben, während der andere Schieber 11 in seine Öffnungsstellung gebracht wird. Diese ist beispielsweise für das Grenzstreuen von besonderer Bedeutung.

Die Funktionsweise dieses Streuers läßt sich folgendermaßen beschreiben:

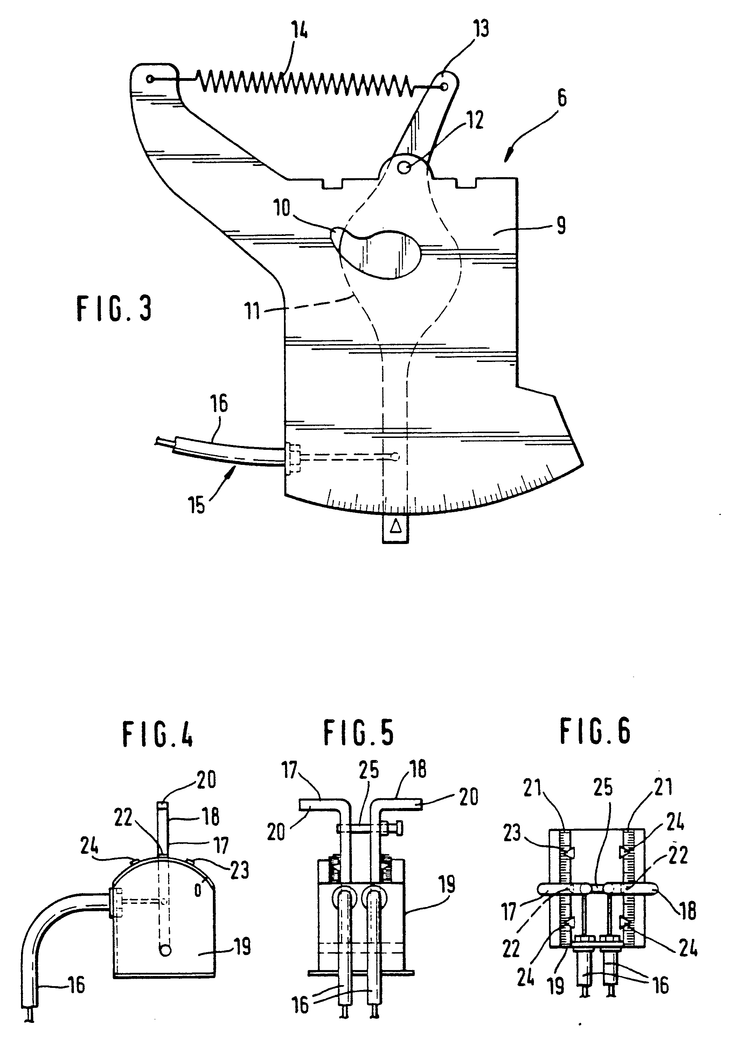

Während des Düngerausbringens auf dem Felde, wenn der Anbauschleuderstreuer an den Dreipunktkraftheber eines Schleppers angeordnet ist, ist der Bedienungsrahmen 19 auf dem Schlepper angeordnet. Über die Betätigungshebel 17 und 18 werden die Schieber 11 in ihre Schließstellung gebracht, so daß sie die Auslauföffnung 10 verschließen. Hiebei sind die Betätigungshebel 17 und 18 ganz nach vorn geschoben, so daß sie auf die 0-Markierungsstellung der Skalen 21 zeigen (vgl. Fig. 4). Die Zeiger 22, 23 und 24 werden auf den Einstellskalen 21 anhand von aus Streutabellen entnommenen Werten eingestellt.

Um den sich in dem Vorratsbehälter 4 befindlichen Dünger auf dem Feld zu verteilen, werden am Feldanfang die Betätigungshebel 17 und 18 so weit bewegt, daß sie mit den Zeigern 22 zur Deckung gebracht werden. Soll nun während der Feldüberfahrt die Ausbringmenge verkleinert oder vergrößert werden, so werden die Betätigungshebel 17 und 18 entweder auf die Zeiger 23 oder die Zeiger 24 eingestellt. Um jeweils von einer größeren Ausbringmenge ausgehend eine kleinere Ausbringmenge einstellen zu können, sollte jeweils der Schieber etwas über die neu einzustellende Menge in Richtung Schließstellung bewegt werden und dann über die Betätigungshebel 17 und 18 auf den neuen Einstellmengenwert eingestellt werden.

Hierdurch wird das in den Bowdenzügen befindliche kleine Spiel ausgeglichen. Durch die Zugfeder 14, die zwischen dem Bedienungshebel 13 und der Bodenplatte 9 angeordnet ist, wird jedoch auch schon ein Großmaß des Spieles ausgeglichen, da der Bowdenzug hierdurch etwas unter Spannung steht.

Damit die Schieber 11 jeweils genau in ihrer eingestellten Position während des Düngerausbringens verbleiben, ist eine Reibfläche zwischen dem Bedienungsrahmen 19 und den Betätigungshebeln 17 und 18 angeordnet, um letztere jeweils in ihrer eingestellten Position zu halten. Für die Null- bzw. Schließstellung der Schieber ist eine Raststellung am Bedienungsramen 19 vorgesehen, in die die Bedienungshebel 17 und 18 dann einrasten.

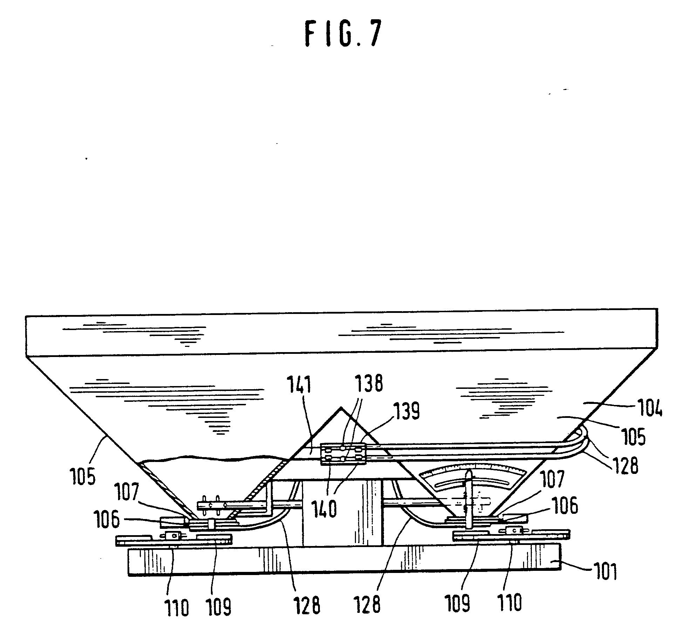

Der Anbauschleuderstreuer gemäß Fig. 7 weist einen Rahmen 101 auf, der auf seiner in Fahrtrichtung 102 vorderen Seite 103 mit nicht dargestellten Kupplungselementen zum Anbau an einen ebenfalls nicht dargestellten Schlepper ausgestattet ist. Ferner ist am Rahmen 101 ein Vorratsbehälter 104 befestigt, der zwei durch ein dachförmiges Mittelteil getrennte trichterförmige Behälterteile 105 aufweist. Die trichterförmigen Behälterteile 105 weisen jeweils eine lösbare Bodenplatte 106 auf, welche an an den Behälterteilen 105 angeschweißten Anschlußelementen 107 mit Schnellverschlüssen 108 befestigt sind. Diese Schnellverschlüsse sind als Haken und Schrauben mit Flügelmuttern ausgebildet. Unterhalb jeder Bodenplatte 106 ist ein als Schleuderscheibe 109 ausgebildetes Verteilorgan angeordnet, das über ein Getriebe 110 von der Schlepperzapfwelle angetrieben wird. Die Bodenplatten 106 sind als Dosierorgane ausgebildet. In jeder Bodenplatte 106 befindet sich eine Auslauföffnung 111, deren Öffnungsweite durch eine unter der Bodenplatte 106 und vor der Auslauföffnung 111 angeordnete Schieberanordnung bestehend aus einem ersten Schieber 112 und einem zweiten Schieber 113 mittels je einer Fernbedienungsvorrichtung eingestellt werden kann. Unterhalb jeder Bodenplatte 106 sind die beiden Schieber 112 und 113 auf einem Bolzen 114 schwenkbar angeordnet. Direkt unter der Bodenplatte 106 befindet sich der Schieber 112. Unter dem Schieber 112 ist der Schieber 113 angeordnet, so daß sich der Schieber 112 zwischen der Bodenplatte 106 und dem Schieber 113 befindet. Ein Bedienungshebel 115 des Schiebers 112 ragt nach vorn über den Bolzen 114 hinaus. An diesem, über den Bolzen 114 hinausragenden Bedienungshebel 115 ist als Teil der jeweiligen Fernbedienungsvorrichtung ein erstes Bedienungselement 116 angeordnet. Dieses Bedienungselement 116 ist als einfach wirkender Hydraulikzylinder 117 und als dem Hydraulikzylinder 117 entgegenwirkende Zugfeder 118 ausgebildet. Der Hydraulikzylinder 117 und die Zugfeder 118 sind an der Bodenplatte 106 befestigt. Der jeweilige Hydraulikzylinder 117 ist über eine Hydraulikschlauch 119 an die Hydraulikanlage eines Schleppers angeschlossen und kann über Steuergeräte von dort aus vom Schlepperfahrer vom Schleppersitz aus betätigt werden.

Der Schieber 112 weist auf seiner dem Bedienungshebel 115 abgewandten Seite das Verlängerungsstück 120 auf. Dieses Verlängerungsstück 120 liegt an einem Anschlagbolzen 121 eines Arretierhebels 122 an, welcher ein erstes Element einer eine Grundöffnungsstellung der Schieberanordnung 112, 113 festlegenden Rasteinrichtung darstellt. Der Arretierhebel 122 ist ebenfalls auf dem Bolzen 114 schwenkbar gelagert. Der Arretierhebel 122 weist einen nach oben abgebogenen Teil 123 auf. An dem abgebogenen Teil 123 des Arretierhebels 122 ist eine Einstellschraube 124 angeordnet, über der der Arretierhebel 122 an einer am Vorratsbehälter 104 angeschweißten Schiene 125, auf der sich auch eine Einstellskala 126 befindet, festgeklemmt werden kann. An dem Anschlagbolzen 121 des Arretierhebels 122 liegt das Verlängerungsstück 120 des Schiebers 112 an, wenn die Schieber sich in ihrer Öffnungsstellung befinden. Die Einstellskala 126 ist für die Grundeinstellung vorgesehen und weist eine lineare Teilung auf. Anhand dieser Einstellskala kann in Verbindung mit den Werten einer Streutabelle der Arretierhebel 122 mit Anschlagbolzen 121 eingestellt werden.

Der Schieber 113 besitzt einen Bedienungshebel 127, der sich bis über das Verlängerungsstück 120 des Schiebers 112 hinaus erstreckt. Zwischen dem Bedienungshebel 127 des Schiebers 113 und dem Verlängerungsstück 120 des Schiebers 112 ist ein zusätzliches, zweites Bedienungselement 128 in Form eines Bowdenzuges 129, 130 als Teil der Fernbedienungsvorrichtung angeordnet. Hierbei ist das Seil 129 an dem Bedienungshebel 127 des Schiebers 113 befestigt, während die Hülle 130 des Bowdenzuges 128 an dem Verlängerungsstück 120 des Schiebers 112 angeschraubt ist.

An dem Verlängerungsstück 120 des Schiebers 112 ist eine Einstellskala 131 angeordnet. Weiterhin ist in dem aufrechten Stück des Verlängerungsstückes 120 des Schiebers 112 ein Langloch 132 angeordnet. An dem aufrechten Stück des Verlängerungsstückes 120 des Schiebers 112 ist ein Kunststoffteil 133 mit Schrauben 134 befestigt. Das Kunststoffteil 133 weist ebenfalls das Langloch 132 auf. Das Langloch 132 in dem Kunststoffteil 133 weist eine jeweils sich in Richtung der Mitte des Langloches verminderte Breite auf. In der Mitte weist das Langloch 132 auf seiner Unterseite eine V-förmige Rastkerbe 135 als zweites Element der die Grundöffnungsstellung der Schieberanordnung bestimmenden Arretieranordnung auf. An dem Verlängerungsstück 127 des Schiebers 113 ist ein Rastbolzen 136 als drittes Element der Rasteinrichtung befestigt, der in das Langloch 132 des Kunststoffteiles 133 hineinragt. Das Langloch 132 des Kunststoffteiles 133 weist in dem Bereich der Rastkerbe 135 eine Höhe auf, die kleiner als der Durchmesser des Rastbolzen 136 ist. Das Kunststoffteil 133 mit dem Langloch 132 bildet in Verbindung mit dem Rastbolzen 136 die Rastelemente, welche die Grundeinstellung der Schieber 112 und 113 zueinander bestimmen, wenn der Rastbolzen 136 sich in der V-förmigen Rastkerbe 135 befindet.

Weiterhin weist das Verlängerungsstück 127 des Schiebers 113 einen Zeiger 137 auf. Dierser Zeiger 137 wirkt mit der Einstellskala 131 zusammen. Diese Einstellskala 131 weist die gleiche Teilung wie die Skala 126 auf, d.h. wenn der Arretierhebel 122 um einen Teilstrich an der Skala 126 verstellt wird, so entspricht dies der Verstellung, als wenn der Schieber 113 um einen Teilstrich gegenüber der Skala 131 verstellt wird.

Der Betätigungshebel 138 der beiden Bowdenzüge 128, wobei jeder Bowdenzug der Dosiereinrichtung einer Schleuderscheibe 109 zugeordnet ist, sind an einem gemeinsamen Betätigungsblock 139 angeordnet. An dem Betätigungsblock 139 sind einstellbare Anschläge 140 angeordnet. An diesen Anschlägen 140 kommen die Betätigungshebel 138 der Bowdenzüge zur Anlage. Diese Anschläge 140 bestimmen die maximale und die minimale Ausbringmenge des Schleuderstreuers. Die Anschläge 140 sind für die beiden Hebel 138 jeweils getrennt und unterschiedlich einstellbar.

Auf der Rückseite des Vorratsbehälters 104 ist an dem Vorratsbehälter 104 eine Halterung 141 angebracht, in die der Betätigungsblock zum Einstellen der maximalen und minimalen Ausbringmenge zu befestigen ist. Hierzu wird der Betätigungsblock 139 in die Halterung 141 eingesteckt. Die Halterung 141 ist somit in einem Bereich angeordnet, aus dem die Schieber 112 und 113 bzw. die Skala 131 und der Zeiger 137 jeweils einsehbar sind. Während des Ausbringes des Düngers auf dem Feld wird der Betätigungsblock 139 auf dem nicht dargestellten Schlepper angeordnet. Weiterhin weist der Betätigungsblock 139 noch Markierungen auf, auf denen die Grundeinstellung sowie die Richtungen angegeben sind, in der die Hebel bewegt werden müssen, wenn eine kleinere oder eine größere Ausbringmenge eingestellt werden soll.

Im folgenden wird die Veränderung der Ausbringmenge pro Flächeneinheit während des Ausbringvorganges sowie das Einstellen eines maximalen und minimalen Ausbringmengenwertes gegenüber einer Grundeinstellung geschildert:

Zunächst stellt der Landwirt anhand der Streutabelle den Arretierhebel 122 so ein, daß der Zeiger 142 des Arretierhebels auf den aus der Streutabelle entnommenen Wert der Skala 126 zeigt. In der eingezeichneten Stellung befinden sich die Schieber 112 und 113 in Betriebsstellung; d.h. in Öffnungsstellung. In dieser beispielhaft eingezeichneten Stellung wird nur ein relativ kleiner Querschnitt der Auslauföffnung 111 freigegeben, so daß eine relativ kleine Ausbringmenge ausgebracht wird. In der Öffnungsstellung liegt der Bedienungshebel 120 des Schiebers 112 an dem Anschlagbolzen 121 des Arretierhebels 122 an. Über den Hydraulikzylinder 117 werden die Schieber 112 und 113 betätigt. Wenn der Hydraulikzylinder 117, wie in dem hier dargestellten Fall drucklos geschaltet ist, zieht die Feder 118 die beiden Schieber 112 und 113 in ihre (eingezeichnete) Öffnungsstellung. Wenn nun der Hydraulikzylinder 117 mit Druck beaufschlagt wird, so wird die Auslauföffnung geschlossen, indem die Schieber in ihre Schließstellung bewegt werden und die Auslauföffnung abdecken. In der Öffnungsstellung liegt das Verlängerungsstück 120 des Schiebers 112, wie oben beschrieben, an dem Anschlagbolzen 121 an.

Um nun ausgehend von dieser Grundeinstellung die maximale bzw. minimale Ausbringmenge über den Schieber 113 verändern zu können und genau einzustellen, wird der Betätigungsblock 139 der Bowdenzüge 128 in die Halterung 141 an der Rückseite des Vorratsbehälters 104 eingesteckt. Anhand der Streutabelle ermittelt der Landwirt, um wieviel Teilstriche der Schieber 113 gegenüber dem Schieber 112 verstellt werden muß, um ausgehend von der Grundeinstellung die maximale und die minimale Ausbringmenge einstellen zu können. Entsprechend der Differenz von Teilstrichen zwischen der Grundeinstellung und der maximalen und der minimalen Ausbringmenge bewegt der Landwirt über den jeweiligen Betätigungshebel 138 des jeweiligen Bowdenzuges 128 den Schieber 113 so lange in Richtung größerer bzw. kleinerer Ausbringmenge, bis die Differenz an Teilstrichen erreicht ist; dieses wird über die Skala 131 in Verbindung mit dem Zeiger 137 eingestellt. Wenn der Schieber 113 über den entsprechenden Betätigungshebel 138 des Bowdenzuges 128 soweit gegenüber dem Schieber 112 verschoben worden ist, daß die maximale bzw. minimale Ausbringmenge gegenüber der Grundeinstellung des Schiebers 112 erreicht ist, wird diese Stellung des Betätigungshebels 138 jeweils durch den entsprechenden einstellbaren Anschlag 140 festgelegt. Durch diese Art der Einstellung des Schiebers 113, daß das Ablesen der Einstellung direkt am Schieber erfolgt und daß die jeweiligen Schieber 113 von dem jeweiligen Bowdenzug 128 immer aus der gleichen Richtung in die maximale Grundeinstellung bewegt werden, wirkt sich das evtl. im Bowdenzug und in den Verbindungsteilen zwischen dem Schieber 113 und dem Betätigungshebel vorhandene Spiel nicht aus. Vielmehr wird es durch diese entsprechende Einstellung ausgeschaltet.

Wenn der Landwirt nun für die beiden Dosierorgane jeweils getrennt und unabhängig voneinander über die Betätigungshebel 138 der Bowdenzüge 128 die jeweilige maximale und minimale Ausbringmenge ausgehend von der Grundausbringmenge eingestellt hat, kann mit dem Ausbringen des Düngers begonnen werden. Um nun vom Schlepper aus jeweils die maximale und minimale Ausbringmenge in bezug auf die Grundeinstellung vom Schleppersitz aus verstellen zu können, wird der Betätigunsblock aus der Halterung 141 herausgenommen und auf dem Schlepper angeordnet.

Dadurch, daß in der Grundeinstellung der beiden Schieber 112 und 113 der Rastbolzen 136 jeweils in die V-förmige Rastkerbe 135 einrastet, was beim Bewegen des jeweiligen Betätigungshebels 138 merklich zu spüren ist, kann der jeweilige Schieber 113 sicher in die Grundeinstellung zurückgestellt werden.

Die beiden Schieber 113, die jeweils einer Schleuderscheibe 109 zugeordnet sind, können über die Betätigungshebel 138 der Bowdenzüge 128 jeweils unabhängig voneinander vom Schleppersitz aus verstellt werden, so daß für jede Schleuderscheibe 109 verschieden große Ausbringmengen pro Flächeneinheit einstellbar sind. Hierzu werden die Schieber 113 gegenüber den Schiebern 112 über die Bowdenzüge 128 derart hin- und herbewegt, daß ausgehend von der Grundeinstellung der Schieber 112 und 113 jeweils ein größerer und ein kleinerer Öffnungsquerschnitt der Auslauföffnung 111 bezüglich der Grundöffnungsweite eingestellt wird. Dadurch, daß die beiden Schieber 113 jeweils unabhängig über die Betätigungshebel 138 der Bowdenzüge 128 verstellt werden können, ist es beispielsweise möglich, daß für die rechte Schleuderscheibe 109 die maximale Ausbringmenge pro Flächeneinheit und für die linke Schleuderscheibe die minimale Ausbringmenge pro Flächeneinheit einstellbar ist. Es ist auch möglich, daß für die eine Schleuderscheibe 109 die Grundausbringmenge eingestellt wird und für die andere Schleuderscheibe 109 die maximale bzw. minimale Ausbringmenge pro Flächeneinheit eingestellt wird.

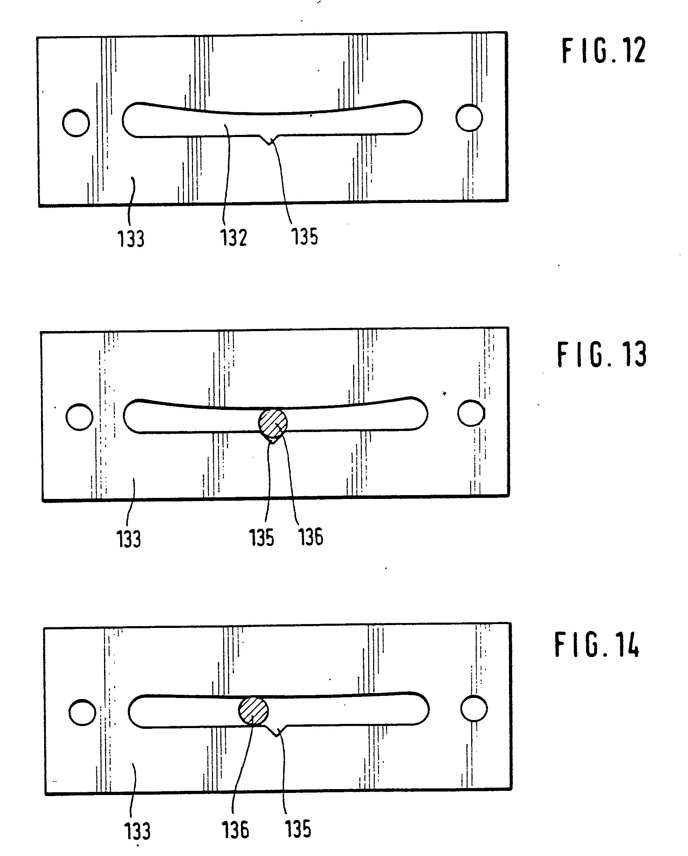

In der Grundeinstellung der Schieber 112 und 113 zueinander befindet sich der Rastbolzen 136 in der V-förmigen Rastkerbe 135 gemäß Fig. 13. Dadurch, daß das Langloch 132 im Bereich der V-förmigen Rastkerbe 135 eine geringere Höhe als der Durchmesser des Rastbolzens 136 aufweist, wird der Rastbolzen 136 durch die Elastizität des Kunststoffteiles 133 in die V-förmige Kerbe 135 gedrückt. Wird nun der Schieber 113 gegenüber dem Schieber 112 verstellt, so wird der Rastbolzen 136 aus der V-förmigen Kerbe 135 herausgedrückt und gleichzeitig wird der obere Teil des Kunststoffteiles oberhalb des Langloches 132 nach oben gedrückt, so daß das Kunststoffteil 133 elastisch verformt wird, wie dieses in Fig. 14 dargestellt ist.

Auf dem Acker werden am Feldende die Auslauföffnungen 111 dadurch geöffnet, daß die Hydraulikzylinder 17 über die auf dem Schlepper befindlichen Steuergeräte drucklos geschaltet werden. Schlagartig ziehen die Zugfedern 118 die jeweiligen Schieber 112 und 113 in ihre eingestellte Öffnungsstellung, so daß das Verlängerungsstück 120 an dem Anschlagbolzen 121 des Arretierhebels 122 anliegt. Wenn der Landwirt nun während der Feldüberfahrt und des Ausbringvorganges aufgrund der vorliegenden Einsatzverhältnisse eine etwas kleinere oder größere Ausbringmenge ausbringen will, so betätigt er den entsprechenden Betätigungshebel 138 des Bowdenzuges 128. Über diesen Bowdenzug 128 wird dann der Schieber 113 gegenüber dem jeweiligen Schieber 112 bewegt, so daß entsprechen der Verstellung des Betätigungshebels 138 ein kleinerer oder ein größerer Öffnungsquerschnitt gegenüber der Grundeinstellung eingestellt wird. Soll anschließend wieder die eingestellte Grundausbringmenge ausgebracht werden, so bewegt der Landwirt den entsprechenden Betätigungshebel 138 wieder zurück, bis er spürbar am Betätigungshebel merkt, daß der Rastbolzen 136 in die V-förmige Rastkerbe 135 eingerastet ist. Somit ist also der durch den Schieber 113 freigegebene Öffnungsquerschnitt der Auslauföffnung 111 während des Einsatzes des Streuers über den Bowdenzug 128 derart veränderbar, daß jeweils unabhängig voneinander für jede Schleuderscheibe 109 getrennt eine kleinere oder größere Ausbringmenge (Öffnungsweite der Auslauföffnung) unabhängig voneinander einstellbar ist.

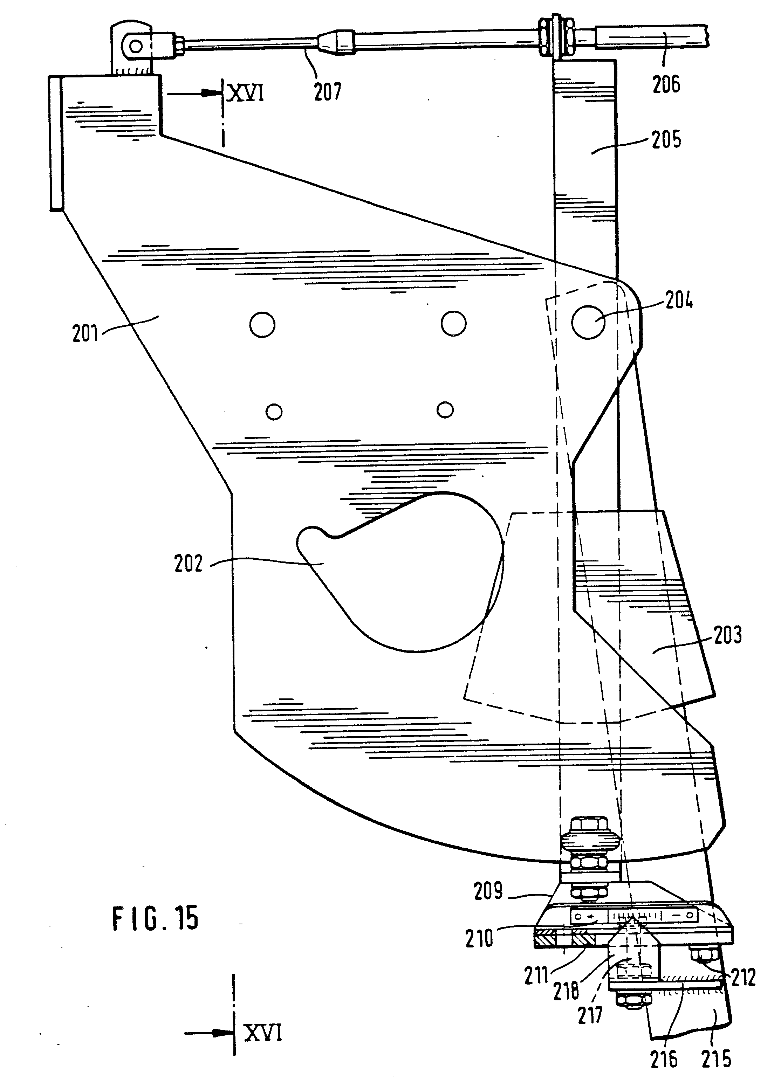

Fig. 15 zeigt eine linke Dosiereinheit eines Anbauschleuderstreuers, der bis auf die nachfolgend beschriebenen Unterschiede im wesentlichen mit den oben beschriebenen Schleuderstreuern übereinstimmt. An nicht gezeigten Behälterteilen sind mit Hilfe von Schnellverschlüssen lösbare Bodenplatten 201 befestigt. Unterhalb der jeweiligen Bodenplatten 201 ist jeweils ein als Schleuderscheibe ausgebildetes Verteilorgan angeordnet, das über ein Getriebe von der Schlepperzapfwelle angetrieben werden.

Die Bodenplatten 201 sind als Dosierorgane ausgebildet. In jeder Bodenplatte 201 befindet sich eine Auslauföffnung 202, deren Öffnungsweite durch einen unter der Bodenplatte 201 vor der Auslauföffnung 202 angeordneten Schieber 203 eingestellt werden kann. Dieser Schieber 203 ist um einen Bolzen 204 schwenkbar. ein Bedienungshebel 205 ragt nach vorn über den Bolzen 204 hinaus. An diesem Bedienungshebel 205 ist ein als Bedienungselement 206 ausgebildeter Bowdenzug 207 angeordnet. Über diesen Bowdenzug 207 ist der Bedienungshebel 205 mit einer auf einem Schlepper angeordneten Fernbedienungseinrichtung 208 verbunden. Hierdurch kann der Schlepperfahrer den Schieber 203 vom Schleppersitz aus betätigen.

Der Schieber 203 weist auf seiner dem Bedienungshebel 205 abgewandten Seite ein Verlängerungsstück 209 auf, an dem eine Einstellskala 210 angeordnet ist. Weiterhin ist in dem aufrechten Stück des Verlängerungsstückes 209 des Schiebers 203 eine Langlochführung angeordnet. An dem aufrechten Stück des Verlängerungsstückes 209 des Schiebers 203 ist ein Kunststoffteil 211 mit Schrauben 212 befestigt. Das Kunststoffteil 211 weist ebenfalls eine Langlochführung 213 mit einer Rastkerbe 214 auf und ist derart ausgebildet, daß die Langlochführung 213 in Schließrichtung des Schiebers 203 offen ausgebildet ist. Die Langlochführung 213 des Kunststoffteiles 211 weist eine jeweils sich in Richtung auf die Mitte des Langloches vermindernde Breite auf. In diese Langlochführung 213 des Schiebers 203 ragt ein an dem an dem einstellbaren Arretierelement 215 angeschweißten Hebel 216 angeschraubtes Rastelement 217. Befindet sich jetzt das Rastelement 217 des einstellbaren Arretierelements 215 in der Mitte der Langlochführung 213 des Schiebers 203, d.h., in der V-förmigen Rastkerbe 214, befindet sich der Schieber 203 in der durch das Arretierelement 215 eingestellten Grundeinstellung. Der am Hebel 216 des einstellbaren Arretierelements 215 angeordnete Zeiger 218, der mit der Einstellskala 210 zusammenwirkt, befindet sich dann auch in seiner Grundstellung.

Die Grundeinstellung wird über das einstellbare Arretierelement 215, das mit einer am Vorratsbehälter angeordneten Einstellskala zusammenwirkt, vorgenommen. Diese Einstellskala weist eine lineare Teilung auf. Anhand dieser Einstellskala wird in Verbindung mit den Werten einer Streutabelle die Grundeinstellung vorgenommen.

Befindet sich das Rastelement 217 in der Rastkerbe 214 der Langlochführung 213 des Schiebers 203, so nimmt der Schieber 203 die Grundöffnungsstellung ein. Die Einstellskala 210 des Schiebers 203 weist die gleiche Teilung wie die am Vorratsbehälter angeordnete Einstellskala auf, d.h., wenn das einstellbare Arretierelement 215 um einen Teilstrich an der Behälterskala verstellt wird, so entspricht dies der Verstellung, als wenn der Schieber 203 um einen Teilstrich gegenüber der Einstellskala 210 verstellt wird.

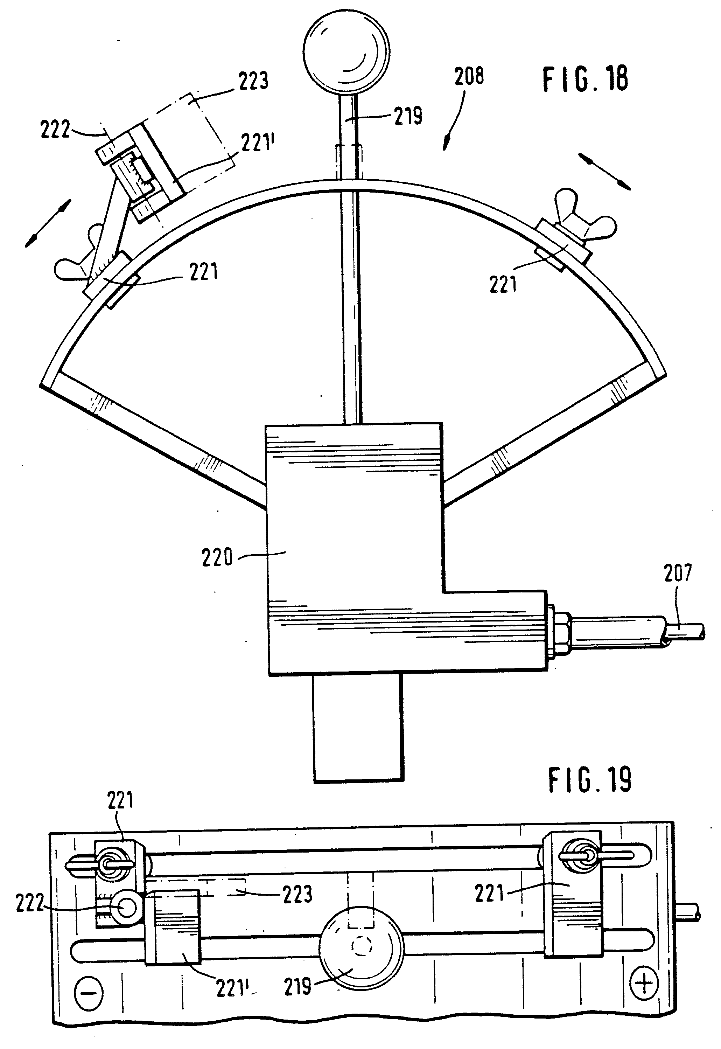

Betätigungshebel 219 der beiden Bowdenzüge 207 gemäß Fig. 18 und 19, wobei jeder Bowdenzug 207 der Dosiereinrichtung einer Schleuderscheibe zugeordnet ist, sind an einem gemeinsamen Betätigungsblock 220 angeordnet. An dem Betätigungsblock 220 sind einstellbare Anschläge 221 angeordnet, an denen die Hebel 219 der Bowdenzüge 205 zur Anlage kommen. Diese Anschläge 221 bestimmen die maximale und minimale Ausbringmenge des Schleuderstreuers und sind für die beiden Hebel 219 jeweils getrennt und unterschiedlich einstellbar. Der Anschlag 221 für die minimal Ausbringmenge ist derart ausgebildet, daß er durch Verschwenken um eine Achse 222 leicht in eine Außerfunktionsstellung 223 bringbar ist, so daß der Hebel 219 leicht an diesem Anschlag 221' vorbeibewegbar ist, um den Schieber 203 in Schließstellung bringen zu können.

Im folgenden wird die Veränderung der Ausbringmenge pro Flächeneinheit während des Ausbringvorganges sowie das Einstellen eines maximalen und minimalen Ausbringmengenwertes gegenüber einer Grundausbringmenge geschildert:

Der Landwirt stellt zunächst das einstellbare Arretierelement 215 anhand einer Streutabelle ein. In der eingezeichneten Stellung gemäß Fig. 18 befindet sich der Schieber 203 in Öffnungsstellung. Der Schieber 203 gibt einen großen Querschnitt der Auslauföffnung 202 frei, was einer großen Ausbringmenge entspricht. Das Rastelement 217 des Arretierelementes 215 befindet sich in der Rastkerbe 214 der Langlochführung 213 und zeigt, daß sich der Schieber 203 in der Grundeinstellung befindet.

Um nun, ausgehend von dieser Grundeinstellung, die maximale bzw. die minimale Ausbringmenge über den Schieber 203 verändern zu können und genau einzustellen, wird der Betätigungsblock 220 der Bowdenzüge 207 in eine Halterung der Vorratsbehälterrückseite eingesteckt. Anhand einer Streutabelle ermittelt der Landwirt, um wieviele Teilstriche der Einstellskala 210 der Schieber 203 verstellt werden muß, um ausgehend von der Grundeinstellung die maximale und die minimale Ausbringmenge einstellen zu können. Entsprechend der Differenz von Teilstrichen zwischen der Grundeinstellung und der maximalen bzw. der minimalen Ausbringmenge bewegt der Landwirt über den jeweiligen Betätigungshebel 219 des jeweiligen Bowdenzuges 207 den Schieber 203 so lange in Richtung größerer bzw. kleinerer Ausbringmengen, bis die Differenz von Teilstrichen erreicht ist. Dieses wird über die Skala 210 in Verbindung mit dem Zeiger 218 eingestellt. Wenn der Schieber 203 über den entsprechenden Betätigungshebel 219 des Bowdenzuges 207 soweit verschoben worden ist, daß die maximale bzw. die minimale Ausbringmenge gegenüber der Grundeinstellung erreicht ist, wird diese Stellung des Betätigungshebels 219 jeweils durch einen entsprechend einstellbaren Anschlag 221 festgelegt.

Wenn der Landwirt nun für die beiden Dosierorgane jeweils getrennt und unabhängig voneinander über die Betätigungshebel 219 der Bowdenzüge 207 die jeweilige maximale und minimale Ausbringmenge ausgehend von der Grundausbringmenge eingestellt hat, kann mit dem Ausbringen begonnen werden. Um nun vom Schleper aus jeweils die maximale und minimale Ausbringmenge in bezug auf die Grundeinstellung vom Schleppersitz aus verstellen zu können, wird der Betätigungsblock 220 aus der Halterung der Vorratsbehälterrückwand herausgenommen und auf dem Schlepper angeordnet.

Dadurch, daß in der Grundeinstellung des Schiebers 203 das Rastelement 217 in die V-förmige Rastkerbe 214 einrastet, was beim Bewegen des jeweiligen Betätigungshebels 219 merklich zu spüren ist, kann der jeweilige Schieber 203 sicher in die Grundeinstellung zurückgestellt werden.

Über die jeweiligen Betätigungshebel 219 der Bowdenzüge 207 können die Schieber 203 jeweils unabhängig voneinander vom Schleppersitz aus verstellt werden, so daß für jede Schleuderscheibe verschieden große Ausbringmengen pro Flächeneinheit einstellbar sind. Dadurch, daß die jeweiligen Schieber 203 jeweils unabhängig über die Betätigungshebel 219 der Bowdenzüge 207 verstellt werden können, ist es beispielsweise möglich, daß für die rechte Schleuderscheibe die maximale Ausbringmenge pro Flächeneinheit und für die linke Schleuderscheibe die minimale Ausbringmenge pro Flächeneinheit einstellbar ist. Es ist auch möglich, daß für die eine Schleuderscheibe die Grundausbringmenge eingestellt wird und für die andere Schleuderscheibe die maximale bzw. minimale Ausbringmenge pro Flächeneinheit eingestellt wird.

In der mit Hilfe des einstellbaren Arretierelements 215 eingestellten Grundeinstellung befindet sich der jeweilige Schieber 203 ebenfalls in der Grundeinstellung, wenn das Rastelement 217, das an dem kleinen Hebel 216 des einstellbaren Arretierelements 215 angeordnet ist, sich in der V-förmigen Rastkerbe 214 der Langlochführung 213 des am Schieber 203 angeordneten Verlängerungsstückes 209 befindet. Dadurch, daß die Langlochführung 213 im Bereich der V-förmigen Rastkerbe 214 eine geringere Höhe als der Durchmesser des als Rastelement 217 ausgebildeten Rastbolzens aufweist, wird das Rastelement 217 durch die Elastizität des Kunststoffteiles 211 in die V-förmige Kerbe 214 gedrückt. Wird nun der Schieber 203 gegenüber dem einstellbaren Arretierelement 215 verstellt, so wird das Rastelement 217 aus der V-förmigen Kerbe 214 herausgedrückt und gleichzeitig wird der untere Teil des Kunststoffteiles unterhalb der Langlochführung 213 nach unten gedrückt, so daß das Kunststoffteil 211 elastisch verformt wird.

Auf dem Acker werden am Feldende die Auslauföffnungen 202 durch Betätigen der Betätigungshebel 219 des Betätigungsblockes 220 geöffnet. Durch die Betätigung des Betätigungshebels 219 erfolgt eine Verstellung des Schiebers 203 durch den am Bedienungshebel 205 des Schiebers 203 angeordneten Bowdenzuges 207. Der Betätigungshebel 219 wird so lange in die Öffnungsrichtung des Schiebers 203 bewegt, bis das Rastelement 217 des einstellbaren Elements 215 in die V-förmige Rastkerbe 214 einrastet, was beim Bewegen des jeweiligen Betätigungshebels 219 merklich zu spüren ist. Jetzt befindet sich der Schieber 203 in der mit Hilfe des einstellbaren Arretierelementes 215 eingestellten Grundeinstellung. Wenn der Landwirt nun während der Feldüberfahrt und des Ausbringvorganges aufgrund der vorliegenden Einsatzverhältnisse eine etwas kleinere oder größere Ausbringmenge ausbringen will, so betätigt er den entsprechenden Betätigungshebel 219 des Bowdenzuges 207. Über diesen Bowdenzug 207 wird dann der jeweilige Schieber 203 bewegt, so daß entsprechend der Verstellung des Betätigungshebels 219 ein kleinerer oder ein größerer Öffnungsquerschnitt gegenüber der Grundeinstellung eingestellt wird. Soll anschließend wieder die Grundausbringmenge ausgebracht werden, so bewegt der Landwirt den entsprechenden Betätigungshebel 219 wieder zurück, bis er spürbar am Betätigungshebel merkt, daß das Rastelement 217 in die V-förmige Rastkerbe 214 der Langlochführung 213 des Schiebers 203 einrastet. Soll nun der Öffnungsquerschnitt der Auslauföffnung 202 verschlossen werden, muß der Landwirt den die minimale Ausbringmenge anzeigenden Anschlag 221 in die Außerfunktionsstellung 223 bringen, so daß der Schieber 203 beim Betätigen des Betätigungshebels 219 über den Bowdenzug 207 in seine Schließstellung bringbar ist. Wird nun der Schieber 203 mit Hilfe des Betätigungshebels 219 wieder in seine Öffnungsstellung zurückgeführt, so muß der die minimal Ausbringmenge anzeigende Anschlag 221 wieder zurückgeschwenkt werden, so daß der Betätigungshebel 219 beim Einstellen der minimalen Ausbringmenge an diesem Anschlag 221 wieder zum Anliegen kommt. Somit läßt sich der durch den Schieber 203 freigegebene Öffnungsquerschnitt der Auslauföffnung 202 während des Einsatzes des Streuers über den Bowdenzug 207 als Teil der Fernbedienungsvorrichtung 208 derart verändern, daß jeweils unabhängig voneinander für jede Schleuderscheibe getrennt eine kleinere oder größere Ausbringmenge unabhängig voneinander einstellbar ist. Hierdurch wird also auf einfachste Weise erreicht, daß mit Hilfe nur eines Schiebers 203 pro Dosierorgan das Einstellen verschieden großer Öffnungsweiten der Auslauföffnung 202 bzw. das Schließen dieser Auslauföffnung erreicht wird.

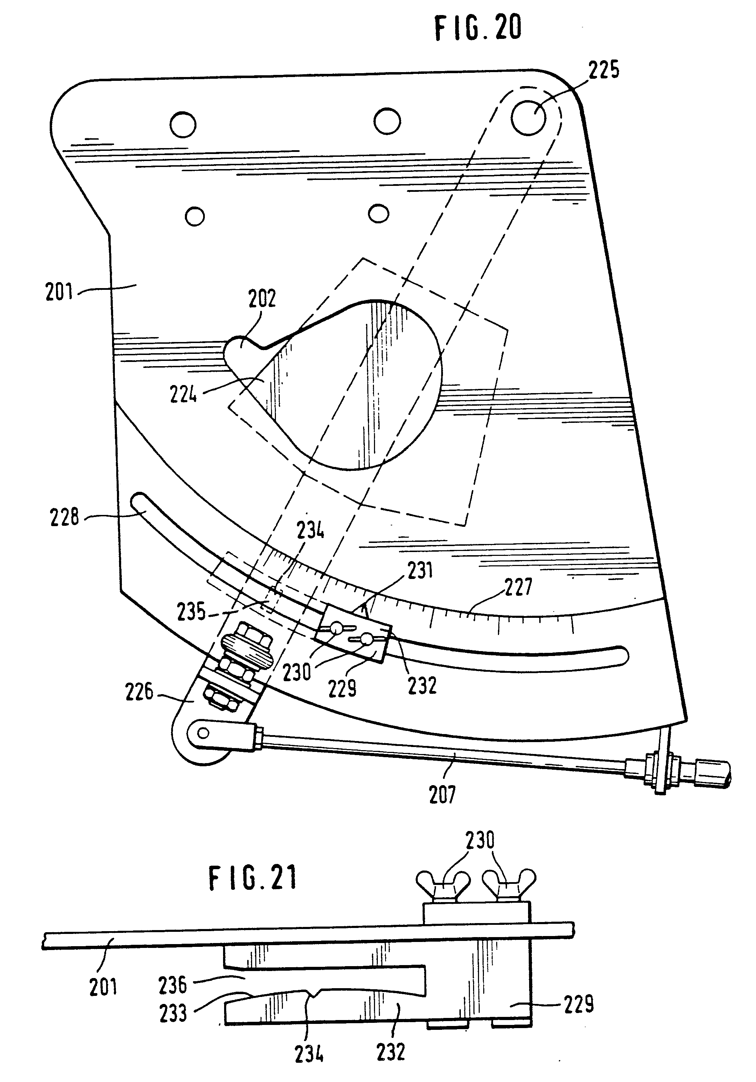

Die Fig. 20 zeigt ebenfalls eine Bodenplatte 201, wobei die Einstellung der verschiedenen Ausbringmengen über eine vom vorherigen Ausführungsbeispiel abweichende Einstellungsvorrichtung erfolgt.

In der Bodenplatte 201 gemäß Fig. 20 befindet sich ebenfalls eine Auslauföffnung 202, deren Öffnungsweite durch einen unterhalb und vor der Auslauföffnung 202 angeordneten Schieber 224 eingestellt werden kann. Dieser Schieber 224 ist um einen Bolzen 225 schwenkbar und weist auf seiner dem Bolzen 225 abgewandten Seite ein Verlängerungsstück 226 auf, an dem der Bowdenzug 207 angelenkt ist. Über diesen Bowdenzug 207 wird der Schieber 224 mit der auf einem Schlepper angeordneten Fernbedienungseinrichtung 208 verbunden, so daß der Schieber 224 vom Schleppersitz aus verstellt werden kann.

Die Bodenplatte 201 weist an ihrem hinteren Ende eine Einstellskala 227 auf, die eine lineare Teilung aufweist. Vor der Einstellskala 227 befindet sich ein Langloch 228, in dem ein einstellbares Arretierelement 229 geführt und mit Schrauben 230 feststellbar ist. Dieses einstellbare Arretierelement 229 weist einen mit der Einstellskala 227 zusammenwirkenden Zeiger 231 auf. Das einstellbare Arretierelement 229 ist als Kunststoffteil 232 ausgebildet und weist eine Langlochführung 233 mit einer V-förmigen Rastkerbe 234 auf. Die Langlochführung 233 ist in Schließrichtung des Schiebers 224 offen ausgebildet, so daß der Schieber 224 in diese Langlochführung 233 eingreifen kann und auch wieder in seine Schließstellung zurückführbar ist, wobei der Schieber 224 eine Raste 235 aufweist, die mit der Rastkerbe 234 des einstellbaren Arretierelementes 229 zusammenwirkt (vgl. Fig. 21). Das Arretierelement 229 mit der Langlochführung 223 ist derart ausgebildet, daß das Langloch 236 in dem Bereich der Rastkerbe 234 eine Höhe aufweist, die kleiner als die Höhe der in das Langloch 236 eingreifenden Teile des Schiebers 224 ist.

Die Einstellung der Ausbringmenge wird über die Betätigungshebel 219 am Betätigungsblock 220 vorgenommen. Zur Einstellung der Grundausbringmenge befindet sich die Raste 235 des Schiebers 224 in der Rastkerbe 234 des einstellbaren Arretierelements 229. Der jeweilige Betätigungshebel 219 der Fernbedienungseinrichtung 208, die zum Einstellen der Ausbringmenge an der Behälterrückwand angeordnet werden kann, wird so lange bewegt, bis der Zeiger 231 des jetzt mit dem Schieber 224 zusammenwirkenden einstellbaren Arretierelemnts 229 den gewünschten, auf der Einstellskala 227 der Bodenplatte 201 ablesbaren Wert anzeigt. Dieser Wert stellt den Grundausbringmengenwert dar. Ausgehend von diesem Grundausbringmengenwert werden die jeweiligen minimalen und maximalen Ausbringmengenwerte festgelegt, wobei diese jeweiligen Ausbringmengenwerte durch die einstellbaren Anschläge 221 am Fernbedienungselement 208 eingestellt werden. An diesen Anschlägen 221 kommt der Betätigungshebel 219 jeweils zum Anliegen, wenn jeweils die minimale oder die maximale Ausbringmenge eingestellt werden soll. Jetzt wird der Zeiger 231 des einstellbaren Arretierelementes 229 durch Betätigung des Hebels 219 über den Bowdenzug 207 wieder auf den Grundausbringmengenwert zurückgestellt und das einstellbare Arretierelement 229 wird in dieser Stellung mit Hilfe der Schrauben 230 an der Bodenplatte 201 festgeklemmt. Nun kann mit dem Ausstreuen des Materials, wie bereits beschrieben, begonnen werden, wobei über nur einen Schieber 224 verschiedene Ausbringmengen durch Verändern der Öffnungsweite der Auslauföffnungen 202 einstellbar sind und sich die Auslaßöffnung auch mit diesem Schieber 224 auf einfachste Weise verschließen läßt.

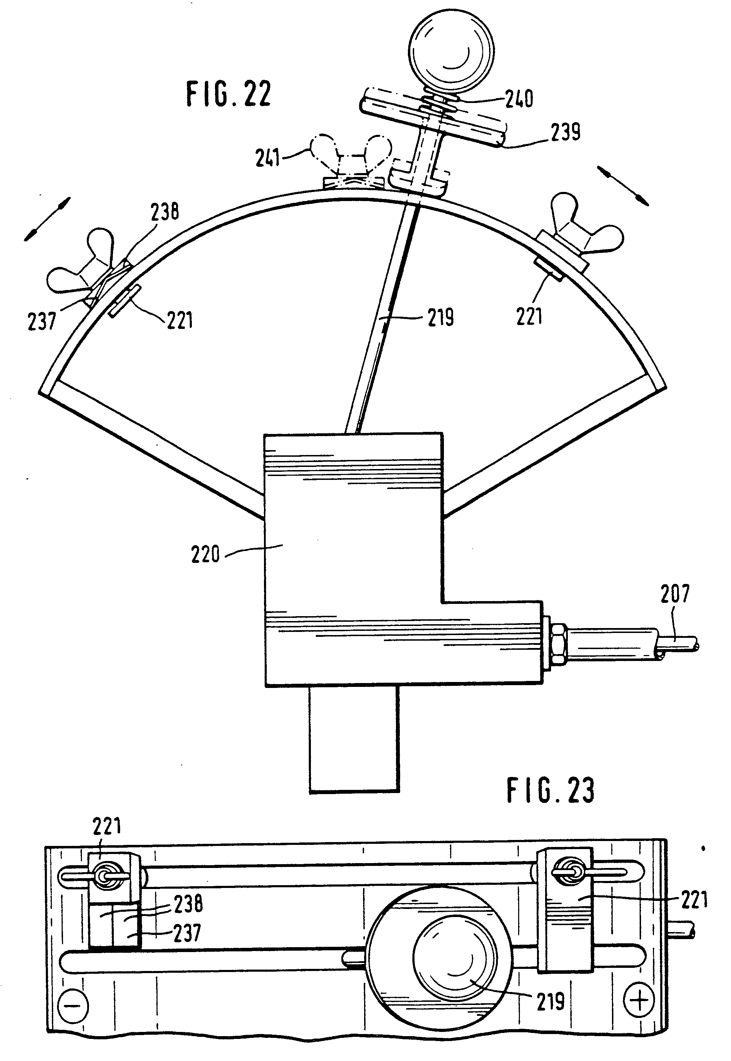

Die Fig. 22 zeigt einen weiteren Betätigungsblock 220, der einen die minimale Ausbringmenge bestimmenden Anschlag 237 mit zwei schrägen Flächen 238 aufweist, über den die Betätigungshebel 219 leicht hinawegbewegbar sind. Die Hebel 219 weisen jeweils nachgebende Elemente 239 auf, die gegen die Federkraft der Federr 240 ausweichen können, wodurch der Betätigungshebel 219 zum Schließen des Schiebers einer Bodenplatte 106 über diesen Anschlag 237 hinweggehoben werden kann. Beim Hinübergleiten über den Anschlag 237 nimmt das Element 239 die mit strichpunktierten Linien dargestellte Stellung ein.

Mit in die Erfindung eingeschlossen werden soll, daß an dem Betätigungsblock 220 eine Einstellskala angeordnet werden kann, so daß die Grundeinstellung vor Beginn der Streuarbeit auch vom Schlepper aus möglich ist. Des weiteren kann erfindungsgemäß vorgesehen sein, daß an dem Betätigungsblock 220 bzw. an der Skala zwischen den beiden Anschlägen 221 und 237 ein mit strichpunktierten Linien dargestellter dritter Anschlag 241 einstellbar angeordnet. Dieser Anschlag 241 zeigt die Normalausbringmenge an. Auch über diesen Anschlag 241 kann das Element 239 durch Anheben hinweggleiten, so daß der Betätigungshebel 219 an diesem Anschlag vorbeizubewegen ist. Somit markieren bzw. bestimmen die Anschläge 237, 241 und 221 die minimale Ausbringmenge, die normale Ausbringmenge und die maximale Ausbringmenge.

## Ansprüche

1. Schleuderstreuer, vorzugsweise Anbauschleuderstreuer, insbesondere für gekörnte Düngemittel, mit einem Vorratsbehälter und einer Verteileinrichtung mit zumindest zwei angetriebenen Verteilorganen, denen die auszubringenden Materialien über zumindest je eine mit einer Schieberanordnung verschließbare und auf eine bestimmt Öffnungsweite einstellbare Auslauföffnung zuführbar sind, wobei die Schieberanordnungen unabhängig voneinander mit Hilfe zweier vom Schleppersitz aus betätigbarer Fernbedienungsvorrichtungen in die Schließstellung und in die Öffnungsstellung bringbar sind, **dadurch gekennzeichnet,** daß die Fernbedienungsvorrichtungen (15, 17, 18, 22, 23, 24; 116, 119, 122, 128, 135, 136, 138, 140; 206, 208, 214, 215, 217, 229, 234, 235, 241) zum Verstellen der Schieberanordnungen (11; 112, 113; 203; 224) in zur bestimmten Öffnungsstellung zusätzliche Öffnungsstellungen ausgebildet sind.

2. Schleuderstreuer nach Anspruch 1, **dadurch gekennzeichnet,** daß jede Fernbedienungsvorrichtung (15, 17, 18, 22, 23, 24; 116, 119, 122, 128, 135, 136, 138, 140; 206, 208, 214, 215, 217, 229, 234, 235, 241) mit einer verstellbaren Markierungs- und/oder Arretieranordnung (22, 23, 24; 122, 135, 136, 140; 214, 215, 217, 229, 234, 235, 241, 221, 237) zum Festlegen der zusätzlichen Öffnungsstellungen der Schieberanordnung (11; 112, 113; 203; 224) ausgebildet ist.

3. Schleuderstreuer nach Anspruch 1 oder 2, **dadurch gekennzeichnet,** daß die zusätzlichen Öffnungsstellungen eine Grundöffnungsstellung und weitere zusätzliche Öffnungsstellungen umfassen, wobei die Öffnungsweiten in den weiteren zusätzlichen Öffnungsstellungen größer und kleiner als in der Grundöffnungsstellung sind.

4. Schleuderstreuer nach Anspruch 3, **dadurch gekennzeichnet,** daß jede Markierungs- und/oder Arretieranordnung (22, 23, 24; 122, 135, 136, 140; 214, 215, 217, 229, 234, 235, 241) wenigstens eine Markierungs- und/oder Anschlageinrichtung (22; 122, 135, 136; 214, 215, 217; 229, 234, 235; 241) zum Festlegen der Grundöffnungsstellung und wenigstens zwei Markierungen und/oder Anschläge (23, 24; 140; 221, 237) zum Festlegen zweier weiterer zusätzlicher Öffnungsstellungen der Schieberanordnung (11; 112, 113; 203, 224) umfaßt, wobei die Öffnungsweite der Auslauföffnung (10; 111; 202) in den zwei weiteren zusätzlichen Öffnungsstellungen größer bzw. kleiner als in der Grundöffnungsstellung ist.

5. Schleuderstreuer nach Anspruch 4, **dadurch gekennzeichnet,** daß jede Fernbedienungsvorrichtung (15, 17, 18, 22, 23, 24; 116, 119, 122, 128, 135, 136, 138, 140; 206, 208, 214, 215, 217, 229, 234, 235, 241) einen über ein Bedienungselement (15; 128; 206) mit der jeweiligen Schieberanordnung (11; 112, 113; 203; 224) verbundenen Betätigungshebel (17, 18; 138; 219) umfaßt, und daß die Markierungen und/oder Anschläge (23, 24; 140; 221, 237) für die zwei weiteren zusätzlichen Öffnungsstellungen mit dem Betätigungshebel (17, 18; 138; 219) zusammenwirken.

6. Schleuderstreuer nach Anspruch 5, **dadurch gekennzeichnet,** daß die Markierungs- und/oder Anschlageinrichtung 22; 241) für die Grundöffnungsstellung in Form einer Markierung und/oder eines Anschlags (22; 241) ausgebildet ist und mit dem Betätigungshebel (17, 18; 138; 219) zusammenwirkt.

7. Schleuderstreuer nach wenigstens einem vorhergehenden Anspruch, **dadurch gekennzeichnet,** daß die Markierungen und/oder Anschläge (22, 23, 24; 140; 221, 237; 241) unabhängig voneinander einstellbar sind.

8. Schleuderstreuer nach wenigstens einem vorhergehenden Anspruch, **dadurch gekennzeichnet,** daß die Betätigungshebel (17, 18; 138; 219) und die Markierungen und/oder Anschläge (23, 24; 140; 221, 237; 241) an einem gemeinsamen Betätigungsblock (139; 220) angeordnet sind und daß der Betätigungsblock (139; 220) an einer Halterung (141) befestigt ist, die in dem Bereich, aus dem die Schieberanordnungen (112, 113; 203; 224) einsehbar sind, am Schleuderstreuer angeordnet ist.

9. Schleuderstreuer nach wenigstens einem vorhergehenden Anspruch, **dadurch gekennzeichnet,** daß die die kleinste Öffnungsweite der Auslauföffnungen (202) festlegenden Markierungen und/oder Anschläge (221 derart ausgebildet sind, daß die Betätigungshebel (219) zur Verstellung bis in die Schließstellung der Schieberanordnungen (112, 113; 203; 224) leicht an diesen Markierungen und/oder Anschlägen (221) vorbeibewegbar sind.

10. Schleuderstreuer nach wenigstens einem der vorhergehenden Ansprüche, **dadurch gekennzeichnet,** daß die an den Betätigungshebeln (17, 18; 138; 219) angeschlossenen Bedienungselemente (16; 128; 207) als Bowdenzüge ausgebildet sind.

11. Schleuderstreuer nach wenigstens einem vorhergehenden Anspruch, **dadurch gekennzeichnet,** daß die Markierungs- und/oder Anschlageinrichtung für die Grundöffnungstellung als eine Rasteinrichtung (122, 135, 136; 214, 215, 217; 229, 234, 235) ausgebildet ist und zwei zusammenwirkende Rastelemente (135, 136; 214, 217; 234, 235) an der Schieberanordnung (112, 113; 203; 224) und einen am Rahmen (106; 201) des Schleuderstreuers zur Festlegung der Grundöffnungsstellung verstell- und einstellbares, mit einem der Rastelemente (135; 217; 234) zusammenwirkendes Arretierelement (122; 215; 229) umfaßt.

12. Schleuderstreuer nach Anspruch 11, **dadurch gekennzeichnet,** daß jede Schieberanordnung als Einschieberanordnung mit einem Schieber (203; 224) ausgebildet und eines (214; 235) der beiden Rastelemente an diesem Schieber und das andere Rastelement (217; 234) am Arretierelement (215, 229) befestigt ist.

13. Schleuderstreuer nach Anspruch 11, **dadurch gekennzeichnet,** daß jede Schieberanordnung als Doppelschieberanordnung mit einem ersten Schieber (112) und einem zweiten Schieber (113) ausgebildet ist, die relativ zueinander verstellbar sind und zur Festlegung der Öffnungsweite der Auslaßöffnung (111) zusammenwirken, und daß eines (135) der Rastelemente am ersten Schieber (112) und das andere Rastelement (136) am zweiten Schieber (113) befestigt ist und der erste Schieber (112) in der Grundöffnungsstellung durch das Arretierelement (122) festgelegt ist.

14. Schleuderstreuer nach Anspruch 13, **dadurch gekennzeichnet,** daß der an dem Betätigungshebel (138) angeschlossene Bowdenzug (128) mit einem Seil (129) am zweiten Schieber (113) angeschlossen und über seine Hülle (130) am ersten Schieber (112) abgestützt ist.

# FIG.1

# FIG.2

FIG.3

FIG.4  FIG.5  FIG.6

# F I G. 7

FIG. 8

EP 0 327 143 A2

FIG.9

FIG.10

FIG.11

F I G . 12

133    132    135

F I G . 13

133         135    136

F I G . 14

133    136    135

FIG.15

FIG.16

FIG.17

FIG.18

FIG.19

FIG.20

FIG.21

FIG. 22

240

239

241

238

237    221

219    221

220

207

FIG. 23

221

238
237

221

219